# EUROPEAN PATENT SPECIFICATION

(11) **EP 1 376 453 B1**
(45) Date of publication and mention of the grant of the patent: **06.06.2007**
(21) Application number: 02020762.7
(22) Date of filing: 16.09.2002
(51) Int. Cl.: G06K 17/00, G07F 7/10, G06K 19/07

(54) **Method for issuing portable electronic mediums**
Verfahren zur Ausgabe von tragbaren elektronischen Medien
Méthode d'émission de supports de données portatifs

(30) Priority: 28.06.2002 JP 2002190887
(43) Date of publication of application: 02.01.2004
(73) Proprietor: KABUSHIKI KAISHA TOSHIBA, Tokyo (JP)
(72) Inventor: Sekiya, Satoshi, Kabushiki Kaisha Toshiba, Tokyo 105-8001 (JP)
(74) Representative: Henkel, Feiler & Hänzel

(56) References cited:
- EP-A- 0 973 127
- WO-A-00/68902
- FR-A- 2 786 635
- US-A1- 2002 050 528
- US-B1- 6 390 374

## Description

This invention relates to the technique for attaining high performance and increasing the number of functions of a portable electronic medium which is generally called an IC card.

An IC card is set into a serviceable state by defining necessary key files, data files and the like in a nonvolatile memory provided inside the IC card according to the service objectives and applications and writing data into the above files.

The above process is generally called "issuance".

In the IC card, a function which executes instructions to issue the IC card itself is prepared, and generally, one file can be defined or data of one unit can be written by executing one instruction.

Issuance of the IC card is made by sequentially executing instructions of a number corresponding to the number of necessary files and data items.

Therefore, when an IC card is issued, instructions used to define files and instructions used to write data as described before are adequately combined and executed, and thus, definition information and data are written in the nonvolatile memory in the IC card each time the instruction is executed.

However, in the above instructions, a large amount of information items such as instruction codes and transmission control information required for communication are contained in addition to information written in the nonvolatile memory.

As a result, information which is redundant in comparison with information to be really written into the nonvolatile memory is transmitted to the card.

Further, generally, the IC card receives each external instruction via a relatively low speed serial interface or sends a response for each instruction.

The speed is generally only 9600 bits/sec in a normal contact type IC card.

Therefore, in the issuing process for transmitting/receiving redundant data as described above, the time required for the transmission process becomes extremely long.

Next, the instruction executing procedure with respect to an IC card in the conventional IC card issuing process is explained.

That is, instructions which define key files and data files in the nonvolatile memory in the IC card and instructions used to write data into the above files are sequentially executed in a predetermined order.

Each instruction is configured by a combination of an instruction code, attached information (such as definition information of the file and data itself to be written) and protocol control information used to perform serial communication.

Further, each time execution of one instruction is terminated, a response code indicating the result of execution is output from the IC card together with the protocol control information.

Thus, conventionally, there occurs a problem that an extremely long time is required for the communication process, and the time required for issuing an IC card becomes long since a large number of redundant instructions are sent to the card via the low-speed interface in the IC card issuing process.

WO 00 68902 discloses an integrated circuit card comprising a storage device having stored thereon one or more code files and one or more data files, and control logic. The control logic implements an ICC runtime environment that executes an applet in response to a command identifying both a code file and data file received from a host system.

FR 2 786 635 discloses a chip card receiving fields of compressed data encapsulated in frames including an indication of the expected length of decompressed data and a length of compressed data. The frames are received in a storage unit and the processor of the card decompresses each data field according to a decompression algorithm over a length based on the indication of the expected length and writes the decompressed data in another buffer storage unit. Several algorithms and optionally several decompression models are installed in the card storage unit, and a couple thereof is selected by the number read in the heading of each frame received.

An object of this invention is to provide a portable electronic medium and a portable electronic medium issuing system and issuing method in which a host device and a portable electronic medium are coupled by serial communication and which can shorten the time for transmission of a message from the host device and reduce the time for the issuing process by storing data received according to the message in a nonvolatile memory when a portable electronic medium is issued.

The above object is achieved by a method according to claim 1. The dependent claims are directed to further advantageous aspects of the invention.

The invention can be more fully understood from the following detailed description when taken in conjunction with the accompanying drawings, in which:
FIG. 1 is a block diagram schematically showing an example of the configuration of an IC card issuing system according to one embodiment of this invention,
FIG. 2 is a block diagram schematically showing an example of the configuration of an IC card,
FIG. 3 is a diagram showing one example of a file structure in a data memory of the IC card,
FIG. 4 is a flowchart for illustrating the card issuing process,
FIG. 5 is a flowchart for illustrating the card issuing process,
FIG. 6 is a diagram for illustrating a process from creation of a message to reception of a response message,
FIGS. 7A to 7E are diagrams showing examples of messages,
FIG. 8 is a diagram showing one example of a file structure in a data memory of the IC card,
FIG. 9 is a flowchart for illustrating a card issuing process,
FIG. 10 is a flowchart for illustrating a card issuing process,
FIG. 11 is a diagram for illustrating a process from creation of a message to reception of a response message,
FIG. 12 is a flowchart for illustrating a card issuing process,
FIG. 13 is a flowchart for illustrating a card issuing process, and
FIG. 14 is a diagram for illustrating a process from creation of a message to reception of a response message.

### (Illustrative Example)

There will now be described an IC card issuing system as an IC card processing system with reference to the accompanying drawings.

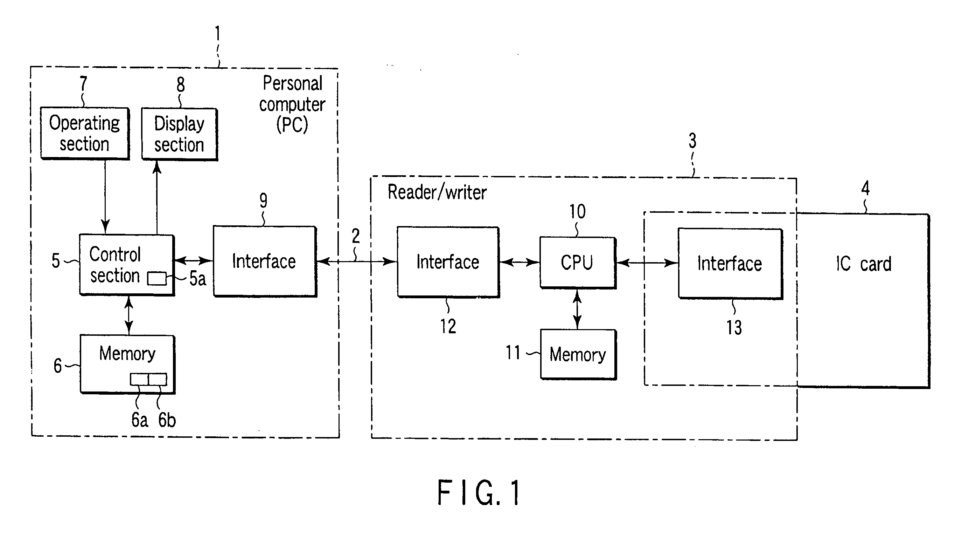

As shown in FIG. 1, an IC card issuing system includes a personal computer (PC) 1 as a host device and a reader/writer 3 connected to the PC 1 via a communication line 2. An IC card 4 as a to-be-issued card connected via a connector (not shown) is to be mounted in the reader/writer 4.

The PC 1 includes a control section 5 which controls the whole portion of the PC 1, a memory 6 in which a control program is stored and various data items are to be stored, an operating section 7 such as a keyboard used to issue operation instructions, a display section 8 which displays operation guidance and the like, and an interface 9 which transfers data with respect to the reader/writer 3.

The control section 5 has the function of authenticating a master key stored in the memory 6 as a secret key with respect to a manufacturer's serial number (card inherent information) supplied from the IC card 4.

The control section 5 includes an internal memory 5a which has the same storage structure as the data memory 17 used as an EEPROM of the IC card 4 which will be described later and is of 8k-byte configuration, for example.

In the memory 6 are a program 6a which creates issuing messages to be sequentially transmitted to the IC cards 4 of respective card types to be issued and a program 6b which simulates a function equivalent to that of a to-be-issued IC card which stores data in the data memory 17 based on the thus created issuing messages.

The issuing message includes transmission data, command code and protocol control information necessary for serial communication, and a head code and end code are attached thereto. As the command codes, there are provided C1: definition of a key file, C2: writing of key data, C3: definition of a data file, C4: writing of data, and Cz: writing of data into the data memory 17.

The control section 5 stores real data which is expanded as bitmap data and written in the data memory 17 into the internal memory 5a based on the issuing message and the program used to run the above simulation.

The control section 5 creates an issuing data lumping message by using the real data stored in the internal memory 5a as issuing data and transmits the same to the IC card 4 via the reader/writer 3.

The reader/writer 3 includes a CPU 10 which controls the whole portion of the reader/writer 3, a memory 11 in which a control program is stored and various data items are to be stored, an interface 12 which transfers data with respect to the PC 1, and an interface 13 which transfers data with respect to the IC card 4. Further, the reader/writer 3 has a detector (not shown) which detects insertion of the IC card 4 and outputs the detection result to the PC 1. Further, the reader/writer 3 may be designed to read the contents of the IC card 4 when insertion of the IC card 4 is detected and output to the PC 1 data indicating whether or not the card is an issuing card in which an application and the like are not yet recorded.

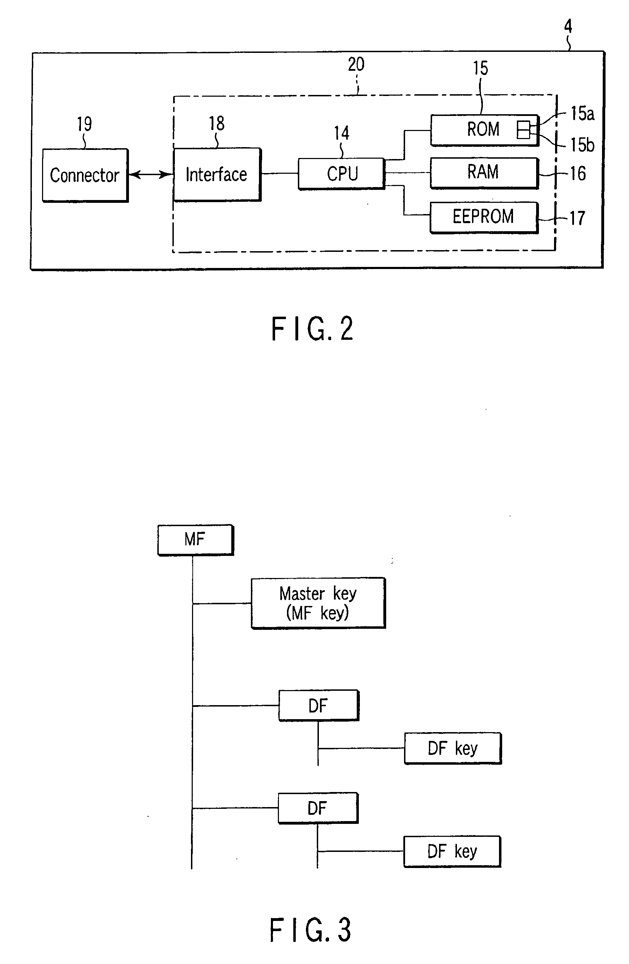

As shown in FIG. 2, the IC card 4 includes a CPU (control element) 14 which controls the whole portion of the IC card 4, a ROM (program memory) 15 in which a control program for the internal operation of the card is stored, a RAM (working memory, volatile memory) 16 used as a transmission/reception buffer of messages which are to be exchanged with respect to the exterior (reader/writer 3) and a temporary storage buffer for data which is being processed by the CPU 14, a data memory (nonvolatile memory) 17 configured by an EEPROM in which operation data used by reading/writing the contents thereof according to an application is stored and a manufacturer's serial number or the like inherent to the card as message concealing key data (realized by also using a master key which will be described later) is stored, an interface 18 which transfers data with respect to the reader/writer 3, and a contact portion 19.

The IC card 4 receives an instruction from the exterior via a relatively low speed serial interface or sends a response with respect to the instruction, and the speed thereof is generally 9600 bits/sec in a normal contact type IC card.

The CPU 14, ROM 15, RAM 16, data memory 17, interface 18 are configured by an IC chip 20, and the contact portion 19 and IC chip 20 are integrally formed in a module and embedded in the main body of the IC card.

In the ROM 15, a command search table 15a in which CLA, INS and the like are registered is provided. In the command search table 15a, the types of command messages based on the command codes are registered.

When receiving a command message, the CPU 14 searches the command search table 15a to determine the type of the command message based on a command code attached to the head of a command header.

In the RAM 16, an access condition flag indicating that an access right is set up is provided and is set by collation or authentication of a key.

FIG. 3 shows one example of a file structure in the data memory 17.

FIG. 3 shows the file structure in the data memory 17 of the IC card 4 and the main folder (MF) is set at the center, a master key (MF key) for issuance and a plurality of data folders (DF) are branched from the main folder (MF) and DF keys are branched from the respective data folders (DF).

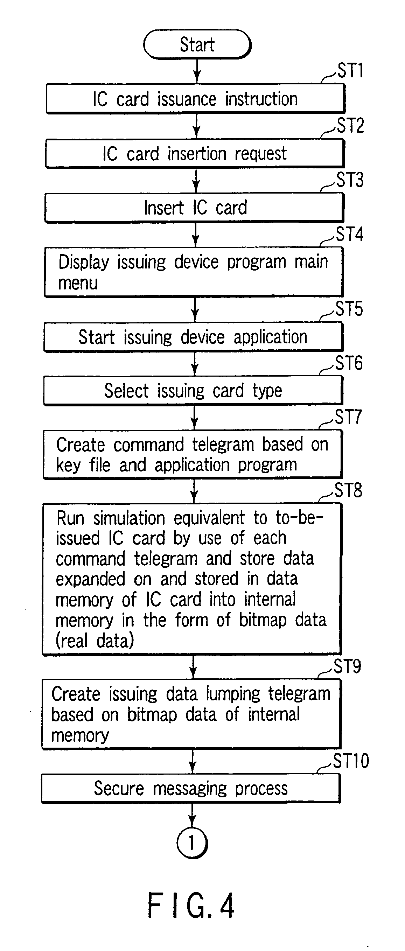

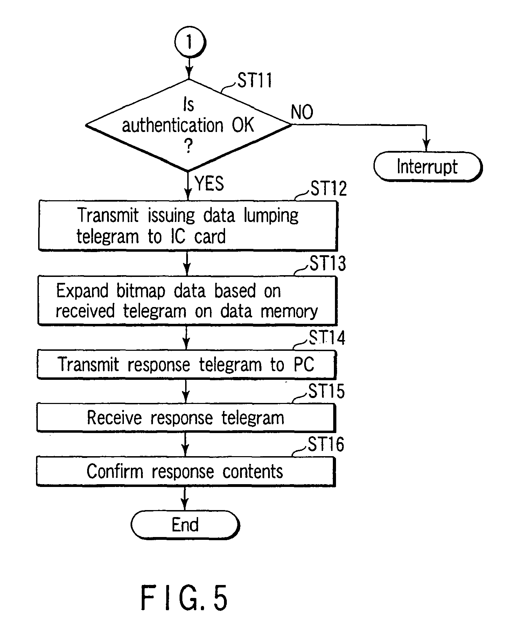

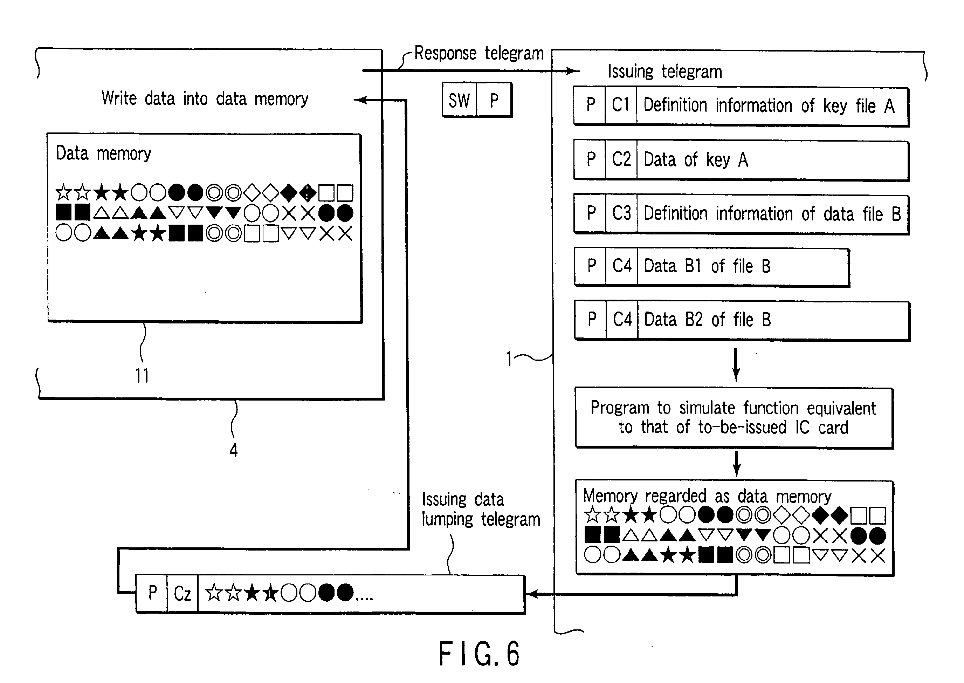

Next, one example of the issuing process of the IC card 4 is explained with reference to the flowcharts shown in FIGS. 4, 5 and the flow of the process shown in FIG. 6.

In this example, as individual data of the IC card 4, a manufacturer's serial number stored in the data memory 17 when the IC chip is manufactured is used. Further, a master key registered in the hardware module at the time of formation of the IC chip is used.

First, an issuing device icon on the screen of the display section 8 of the PC 1 is clicked (ST1). Then, the control section 5 determines issuance of an IC card and causes the display section 8 to display a request to insert an issuing IC card 4 into the reader/writer 3 (ST2).

Based on the display contents, an IC card 4 to be issued is inserted into the reader/writer 3 (ST3).

Then, the control section 5 causes the display section 8 to display an issuing device program main menu (ST4) based on an insertion detecting signal (output from the reader/writer 3 to the control section 5 of the PC 1) and starts an issuing device application (ST5). The type of an issuing card is selected by use of the operating section 7 based on the menu display contents (ST6) .

Thus, the control section 5 creates lines of issuing messages to be transmitted to the IC card 4 based on selection of the type of issuing card (ST7).

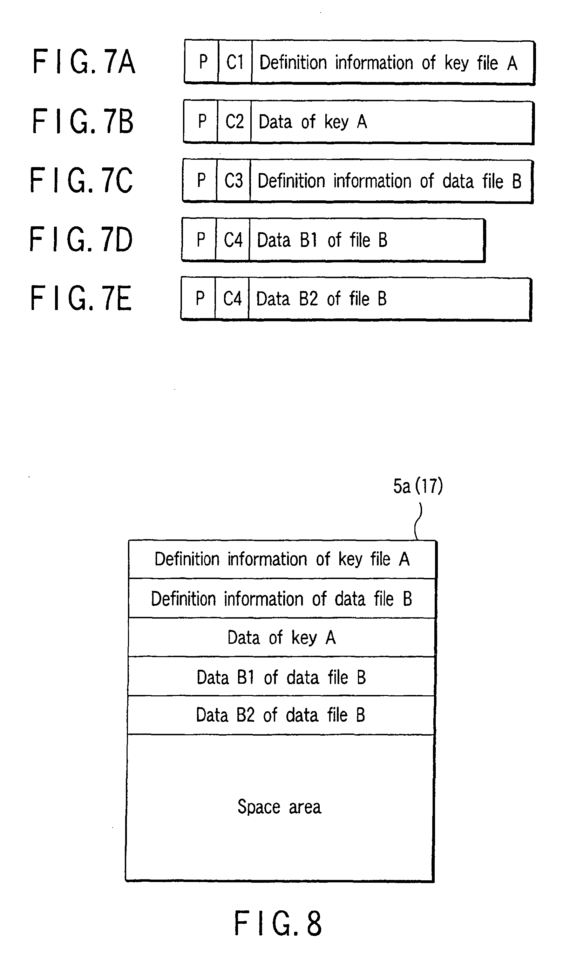

For example, a first message in which protocol control information P and a command C1 indicating the definition of a key file A are attached to definition information of the key file A as shown in FIG. 7A, a second message in which protocol control information P and a command C2 indicating writing of data of the key A are attached to the data of the key A as shown in FIG. 7B, a third message in which protocol control information P and a command C3 indicating the definition of a data file B are attached to definition information of the data file (application program) B as shown in FIG. 7C, a fourth message in which protocol control information P and a command C4 indicating writing of data B1 of the data file B are attached to the data B1 of the data file B as shown in FIG. 7D, and a fifth message in which protocol control information P and a command C5 indicating the data B1 of the data file B are attached to data B2 of the data file B as shown in FIG. 7E are created.

The data B1 of the data file B is common data irrespective of the types and applications of the IC cards 4 and the data B2 of the data file B is data such as individual information which is different for each IC card 4.

Further, the control section 5 reads out a program which simulates a function equivalent to that of a to-be-issued IC card 4 from the memory 6 and expands and stores data (bitmap data) which is the same as data expanded on and stored in the data memory 17 of the IC card 4 according to the created issuing messages based on the above program on and in the internal memory 5a (ST8). That is, as shown in FIG. 8, the definition information of the key file A, the definition information of the data file B, data of the key A, data B1 of the data file B and data B2 of the data file B are stored.

Further, the control section 5 creates a issuing data lumping message by use of bitmap data of the internal memory 5a (ST9). As shown in FIG. 6, the issuing data lumping message is configured by attaching protocol control information P and a command Cz indicating writing into the data memory 17 to the bitmap data.

Next, the control section 5 performs a secure messaging process as an authentication process of the IC card 4 by use of the MF key (ST10).

As a result, when the IC card 4 is authenticated (ST11), the control section 5 transmits the issuing data lumping message to the CPU 14 of the IC card 4 (ST12).

Further, the CPU 14 of the IC card 4 writes issuing data based on bit map data of the received issuing data lumping message into the data memory 17 (ST13).

The CPU 14 of the IC card 4 outputs a response message (which includes a response code SW and protocol control information P) as the result of the writing process to the control section 5 of the PC 1 (ST14).

As a result, the control section 5 of the PC 1 receives the response message as the processing result from the IC card 4 (ST15) and confirms the response contents (ST16).

Further, if authentication of the IC card 4 is not successfully made (ST11), the issuing process is interrupted.

As described above, in a system in which the IC card issuing device and the IC card are coupled by serial communication and which issues the IC card by storing data received according to a message from the IC card issuing device into the nonvolatile memory, the message transmission time can be reduced (from several minutes to several tens of seconds) and the issuance processing time can be reduced.

### (First Embodiment)

Further, in the illustrative example, a case where the contents of the nonvolatile memory obtained after all of the data items containing individual information and the like are written are simulated is explained, but this invention is not limited to this case. For example, individual information and the like can be written by use of the conventional write instruction.

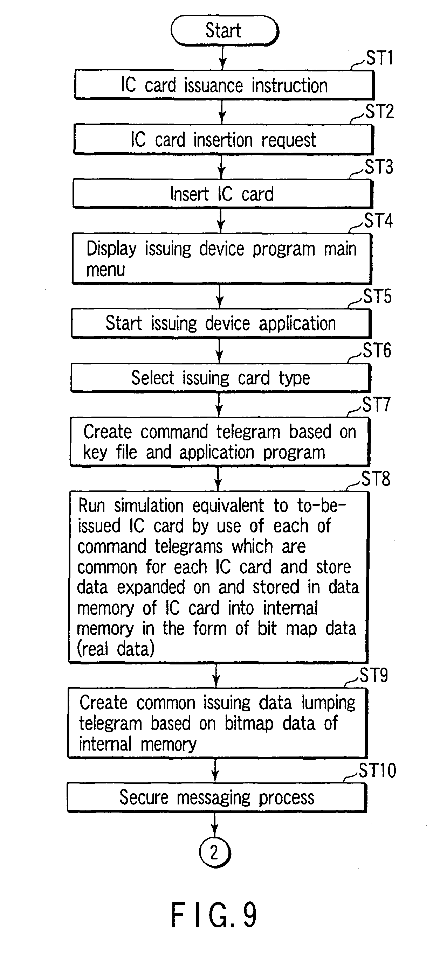

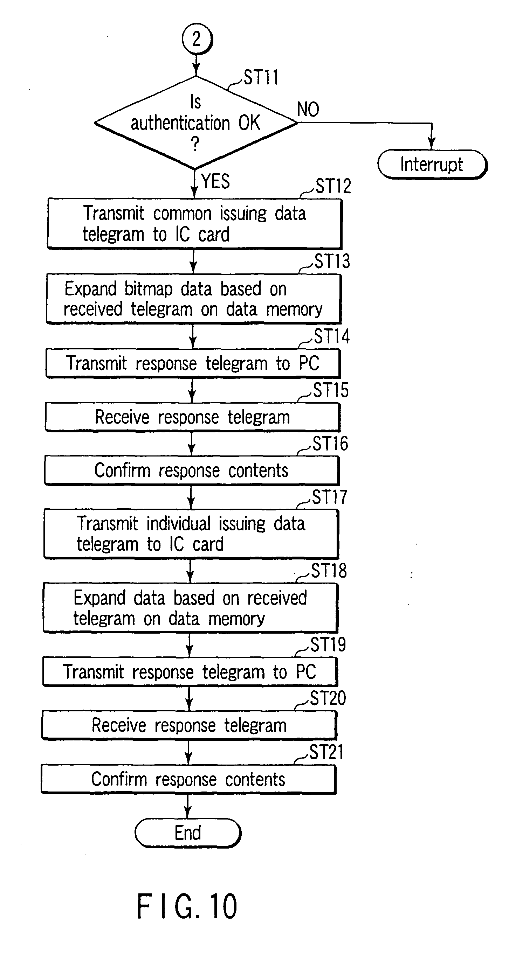

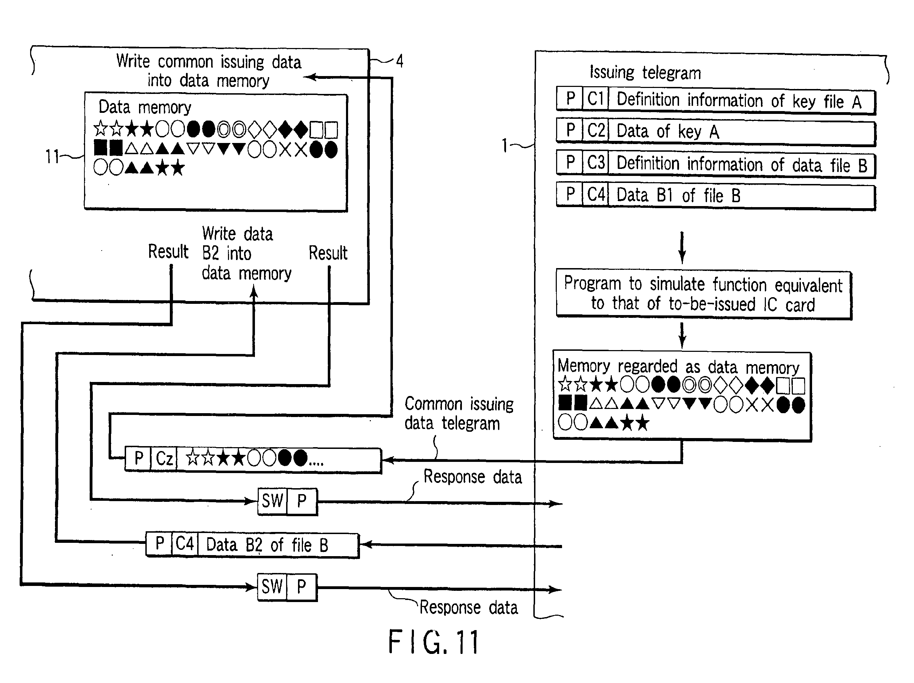

The operation performed in this case is explained with reference to the flowcharts shown in FIGS. 9, 10 and the flow of a process shown in FIG. 11. In FIGS. 9, 10, 11, portions which are the same as those in the flowcharts shown in FIGS. 4, 5 and the flow of the process shown in FIG. 6 are denoted by the same symbols and the explanation thereof is omitted.

That is, after a command message is created in step ST7, the control section 5 reads out a program which is used to simulate the function equivalent to that of a to-be-issued IC card 4 from the memory 6. Then, the control section 5 expands and stores data (bit map data) which is the same as data expanded on and stored in the data memory 17 of the IC card 4 according to a message which is common to the IC cards in the created issuing message based on the above program on and into the internal memory 5a (ST8'). That is, definition information of the key file A, definition information of the data file B, data of the key A and data B1 of the data file B are stored.

Further, the control section 5 creates a common issuing data message based on the bitmap data in the internal memory 5a (ST9'). As shown in FIG. 11, in the common issuing data message, protocol control information P and a command Cz indicating writing into the data memory 17 are attached to the bitmap data.

Next, the control section 5 performs a secure messaging process as the authentication process of the IC card 4 by use of the MF key (ST10)..

Thus, when the authentication process for the IC card 4 is successfully performed (ST11), the control section 5 transmits the common issuing data message to the CPU 14 of the IC card 4 (ST12').

Then, the CPU 14 of the IC card 4 writes issuing data based on the bitmap data of the received common issuing data message into the data memory 17 (ST13').

The CPU 14 of the IC card 4 outputs a response message (including a response code SW and protocol control information P) obtained as the result of the writing process to the control section 5 of the PC 1 (ST14).

Thus, the control section 5 of the PC 1 receives the response message from the IC card 4 as the result of the process (ST15) and confirms the response contents thereof (ST16).

After the confirmation, the control section 5 of the PC 1 transmits "data B2 of the data file B" as an individual issuing data message to the IC card (ST17).

Then, the CPU 14 of the IC card 4 additionally expands data which is based on the received individual issuing data message on the data memory 17 (ST18).

The CPU 14 of the IC card 4 outputs a response message (including a response code SW and protocol control information P) obtained as the result of the writing process to the control section 5 of the PC 1 (ST19).

Thus, the control section 5.of the PC 1 receives the response message from the IC card 4 as the result of the process (ST20) and confirms the response contents thereof (ST21).

As described above, part of an instruction group obtained by excluding part of issuing instructions such as an instruction of writing data or individual information which is different for each IC card to be issued is processed based on the above procedure. Then, the issuing process for the remaining part of the instructions is performed by use of the conventional instructions later.

As a result, it becomes unnecessary to run a simulation for each IC card on the computer side by processing only the instructions which are common to all of the IC cards according to the above procedure and the process on the computer side can be simplified.

### (Second Embodiment)

In the illustrative example, data transmitted in the form of an issuing data lumping message is data stored in the internal memory 5a, but it is possible to compress data of the writing contents into the nonvolatile memory by use of the data compression technique so as to further reduce the transmission time. At this time, it is necessary to decompress the compressed issuing data lumping message on the IC card side.

In this case, a program to decompress compressed data transmitted to the IC card 4 is not provided on the program memory (ROM 15) and the program is written into a working memory (RAM 16) of the IC card 4 from the exterior at the start time of the issuing process.

Thus, the decompression program which is used only at the issuing time of an IC card is not stored in the program memory (ROM 15) so that the limited program memory area can be effectively used.

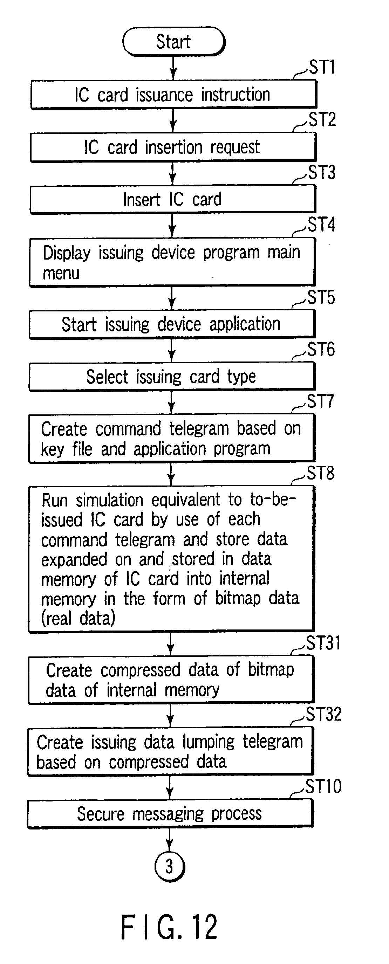

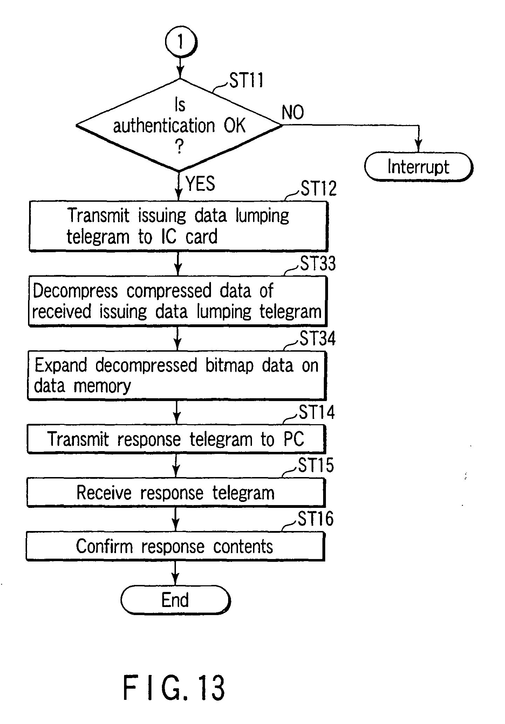

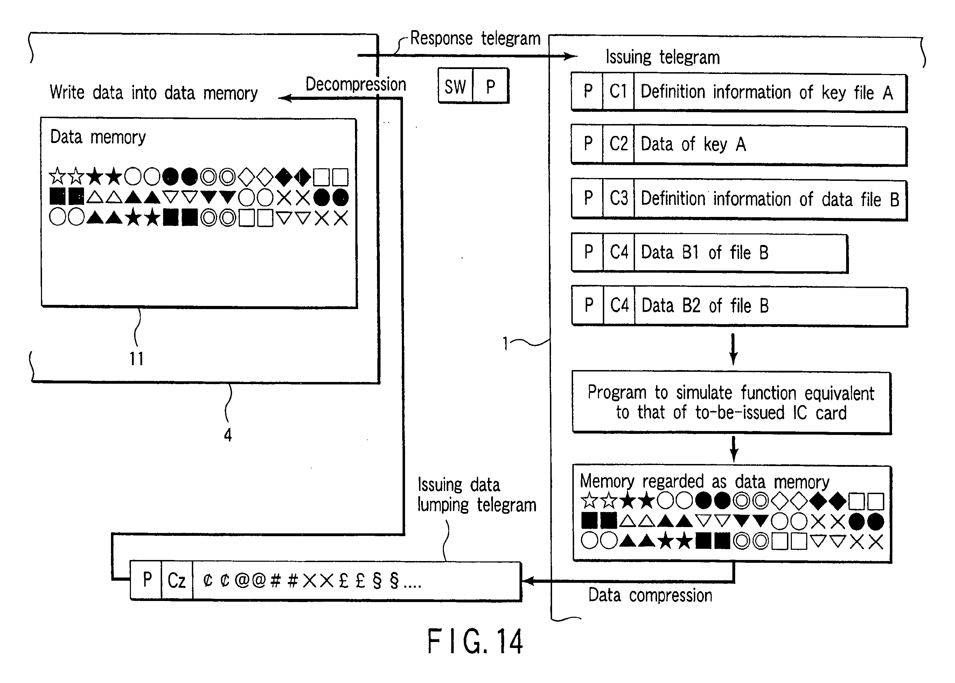

The operation performed in this case is explained with reference to the flowcharts shown in FIGS. 12, 13 and the flow of a process shown in FIG. 14. In FIGS. 12, 13, 14, portions which are the same as those in the flowcharts shown in FIGS. 4, 5 and the flow of the process shown in FIG. 6 are denoted by the same symbols and the explanation thereof is omitted.

That is, the control section 5 creates compressed data (ST31) with respect to bitmap data (real data) stored in the internal memory in the step ST8 and creates an issuing data lumping message based on the compressed data (ST32). As shown in FIG. 14, the issuing data lumping message has protocol control information P and a command Cz indicating writing into the data memory 17 attached to the compressed data of the bitmap data.

Next, the control section 5 performs a secure messaging process as the authentication process of the IC card 4 by use of the MF key (ST10).

Thus, when the authentication process for the IC card 4 is successfully performed (ST11), the control section 5 transmits the issuing data lumping message to the CPU 14 of the IC card 4 (ST12).

Then, the CPU 14 of the IC card 4 decompresses the compressed data of the received issuing data lumping message into bitmap data by use of a program to decompress the compressed data of the RAM 16 (ST33) and writes issuing data based on the decompressed bitmap data into the data memory 17 (ST34).

The CPU 14 of the IC card 4 outputs a response message (including a response code SW and protocol control information P) obtained as the result of the writing process to the control section 5 of the PC 1 (ST14) .

Thus, the control section 5 of the PC 1 receives the response message from the IC card 4 as the result of the process (ST15) and confirms the response contents thereof (ST16).

As described above, when a series of instructions (instruction execution procedure) executed at the time of issuance of an IC card is executed, the type of information which is to be set in the nonvolatile memory of the IC card is previously simulated on the issuing computer side. Then, the contents thereof are transmitted to the IC card and written into the nonvolatile memory of the IC card so that an IC card can be issued with less communication in comparison with conventional issuing procedure in which a large number of instructions are combined and transmitted to the card.

Thus, since the simulation process is performed in the memory in the computer, the result can be attained at extremely high speed. The contents obtained as the result and written into the nonvolatile memory are transmitted to the IC card by use of a special instruction and written into the nonvolatile memory of the IC card as they are.

As a result, it becomes possible to reduce time required for the communication process and drastically reduce the processing time of the whole issuing process.

Further, data written into the IC card when issuing the IC card contains two types of data items including common data for respective types and application of IC cards and data items such as individual information items which are different for respective cards.

As the method for issuing an IC card, the procedure for simulating the contents of the nonvolatile memory after all data including individual information has been written and the procedure for separately writing individual information by use of the conventional writing instructions can be selectively used.

Further, when the contents of the nonvolatile memory are transferred to the IC card, the procedure for transferring the data to the IC card after the data size thereof is compressed by use of the data compression technique, decompressing the compressed data in the IC card and writing the decompressed data into the nonvolatile memory can be selected.

When the above writing procedure is performed, a method for executing a program for decompression stored in the program memory (ROM) of the IC card or a method for executing the program which is written into a working memory (RAM) before transferring can be selectively used.

That is, after a series of instructions for issuance of an IC card is executed with respect to the IC card on the computer side which issues the IC card, a change in the contents written into the nonvolatile memory of the IC card is previously simulated and the written contents are transferred to the IC card and written into the nonvolatile memory.

As a result, the amount of communication with respect to the IC card is reduced in the IC card issuing process, and consequently, time required for issuance of the IC card can be significantly reduced.

That is, the greater part of the time required for issuance of the IC card is communication processing time required for sending instructions to the IC card, and if the communication time can be reduced, the time required for issuance of the IC card can be drastically reduced.

## Claims

1. A method for issuing portable electronic mediums (4) each having a data memory (17) made of a non-volatile memory, and being connectable to a host apparatus (1), said method comprising:
providing said host apparatus (1), said host apparatus includes a memory (6) storing a program for performing a simulation having a function equal to a function of a portable electronic medium (4) to be issued to store data in a data memory (17) of said portable electronic medium (4);
causing said host apparatus (1) to generate issued messages including:
(i) a command message comprising a specific instruction which is used when the portable electronic medium (4) is issued, and definition information based on the specific instruction; or
(ii) a command message comprising a specific instruction which is used when the portable electronic medium (4) is issued and program data based on the specific instruction,
causing said host apparatus (1) to record bitmap data in an internal memory (5a) according to a program which performs a simulation according to the program stored in the memory (6), the bitmap data recorded in the internal memory (5a) being included in the generated issued messages and being used in common for different portable electronic mediums (4), and being identical to bitmap data developed in data memories (17) of the portable electronic mediums (4);
causing said host.apparatus,(1),to generate common issued data messages for different portable electronic mediums (4), the common issued data messages including the bitmap data developed in the internal memory (5a), and a specific instruction which indicates a write operation to be performed for the data memory (17) of the portable electronic medium (4);
causing said host apparatus (1) to transmit the generated common issued data messages to the portable electronic medium (4);
causing said host apparatus (1) to transmit individual issued data messages to the portable electronic medium (4), the individual issued data messages being included in the generated issued messages being different for the different portable electronic mediums (4);
causing said portable electronic medium (4) to write to its data memory (17) issued data developed in the bitmap data supplied from the host apparatus (1) at the time of issuance;
causing said portable electronic medium (4) to develop individual issued data into further bitmap data in the data memory (17) based on individual issued data messages, the individual issued data messages including data supplied from the host apparatus (1) at the time of issuance and being different for the different portable electronic mediums (4);
causing said portable electronic medium (4) to write the further bitmap data of the developed individual issued data in the data memory (17);
causing said portable electronic medium (4) to read from its data memory (17) the definition information based on a specific instruction which an external apparatus provides when the portable electronic card is used after the issuance; and
causing said portable electronic medium (4) to execute a process for enabling use of the portable memory medium (4) by writing and reading data to and from its data memory (17), using the definition information .

2. A method according to claim 1, wherein the common issued data message includes protocol control information and a command indicating the write operation to be performed for the data memory (17) of said portable electronic medium (4), and the protocl information and the command information are attached to the bit map data.

3. A method according to claim 1, wherein an identification process is performed as an identification process before the common issued data message is transmitted.

## Patentansprüche

1. Verfahren zum Ausgeben von tragbaren elektronischen Medien (4), die jeweils einen aus einem nichtflüchtigen Speicher hergestellten Datenspeicher (17) aufweisen und mit einer Host-Vorrichtung (1) verbunden werden können, wobei das Verfahren umfasst:
Bereitstellen der Host-Vorrichtung (1), wobei die Host-Vorrichtung einen Speicher (6) zum Speichern eines Programm zum Durchführen einer Simulation umfasst, die eine Funktion aufweist, die gleich einer Funktion eines auszugebenden tragbaren elektronischen Mediums (4) ist, um Daten in einem Datenspeicher (17) des tragbaren elektronischen Mediums (4) zu speichern,
Veranlassen der Host-Vorrichtung (1), Ausgabe-Nachrichten zu erzeugen, mit:
(i) einer Befehlsnachricht, mit einer spezifische Anweisung, die verwendet wird, wenn das tragbare elektronische Medium (4) ausgegeben wird, und mit Definitionsinformation basierend auf der spezifischen Anweisung; oder
(ii) einer Befehlsnachricht, mit einer spezifische Anweisung, die verwendet wird, wenn das tragbare elektronische Medium (4) ausgegeben wird, und mit Programmdaten basierend auf der spezifischen Anweisung;
Veranlassen der Host-Vorrichtung (1), Bitmapdaten in einem internen Speicher (5a) gemäß einem Programm zu speichern, das eine Simulation gemäß dem in dem Speicher (6) gespeicherten Programm durchführt, wobei die in dem internen Speicher (5) aufgezeichneten Bitmapdaten in den erzeugten Ausgabe-Nachrichten enthalten sind und gemeinsam für verschiedene tragbare elektronische Medien (4) verwendet werden, und identisch mit Bitmapdaten sind, die in Datenspeichern (17) der tragbaren elektronischen Medien (4) entwickelt wurden;
Veranlassen der Host-Vorrichtung (1), gemeinsame Ausgabe-Datennachrichten für verschiedene tragbare elektronische Medien (4), wobei die gemeinsamen Ausgabe-Datennachrichten die Bitmapdaten enthalten, die in dem internen Speicher (5a) entwickelt wurden, und eine spezifische Anweisung, die einen Schreibvorgang angibt, der für den Datenspeicher (17) des tragbaren elektronischen Mediums (4) durchzuführen ist, zu erzeugen;
Veranlassen der Host-Vorrichtung (1), die erzeugten gemeinsamen ausgegebenen Datennachrichten zu dem tragbaren elektronischen Medium (4) zu übertragen;
Veranlassen der Host-Vorrichtung (1), einzelne ausgegebene Datennachrichten zu dem tragbaren elektronischen Medium (4) zu übertragen, wobei die einzelnen Ausgabe-Datennachrichten in den erzeugten ausgegebenen Nachrichten enthalten und für die verschiedenen tragbaren elektronischen Medien (4) verschieden sind;
Veranlassen des tragbaren elektronischen Mediums (4), in seinen Datenspeicher (17) Ausgabe-Daten zu schreiben, die in den Bitmapdaten erzeugt wurden, die von der Host-Vorrichtung (1) zur Zeit der Ausgabe geliefert wurden;
Veranlassen des tragbaren elektronischen Mediums (4), einzelne Ausgabe-Daten in zusätzliche Bitmapdaten in dem Datenspeicher basierend auf einzelnen Ausgabe-Datennachrichten zu entwickeln, wobei die einzelnen Ausgabe-Datennachrichten Daten enthalten, die von der Host-Vorrichtung (1) zur Zeit der Ausgabe geliefert wurden und für die verschiedenen tragbaren elektronischen Medien (4) verschiedenen sind;
Veranlassen des tragbaren elektronischen Mediums (4), die zusätzlichen Bitmapdaten der entwickelten einzelnen Ausgaben-Daten in den Datenspeicher (17) zu schreiben;
Veranlassen des tragbaren elektronischen Mediums (4), aus dem Datenspeicher (17) die Definitionsinformation basierend auf einer spezifischen Anweisung zu lesen, die eine externe Vorrichtung bereitstellt, wenn das tragbare elektronische Medium nach der Ausgabe verwendet wird; und
Veranlassen des tragbaren elektronischen Mediums (4), einen Prozess auszuführen, um die Verwendung des tragbaren Mediums (4) zu ermöglichen, indem Daten in und aus seinem Datenspeicher (17) mit der Definitionsinformation geschrieben und gelesen werden.

2. Verfahren gemäß Anspruch 1, bei dem die gemeinsame ausgegebene Datennachricht Protokollsteuerinformation und einen Befehl aufweist, der den Schreibvorgang angibt, der für den Datenspeicher (17) des tragbaren elektronischen Mediums (4) durchzuführen ist, und die Protokollinformation und die Befehlsinformation an den Bitmapdaten angefügt sind.

3. Verfahren gemäß Anspruch 1, bei dem ein Identifikationsprozess als ein Identifikationsprozess durchgeführt wird, bevor die allgemeine ausgegebene Datennachricht übertragen wird.

## Revendications

1. Procédé destiné à émettre des supports électroniques portables (4) ayant chacun une mémoire de données (17) faite d'une mémoire non volatile, et pouvant être raccordée à un appareil hôte (1), ledit procédé comprenant les étapes consistant à :
mettre à disposition ledit appareil hôte (1), ledit appareil hôte comporte une mémoire (6) stockant un programme destiné à effectuer une simulation ayant une fonction égale à une fonction d'un support électronique portable (4) à émettre pour stocker des données sur une mémoire de données (17) dudit support électronique portable (4) ;
amener ledit appareil hôte (1) à générer des messages émis, comportant :
(i) un message d'ordre comprenant une instruction spécifique qui est utilisée lorsque le support électronique portable (4) est émis, et des informations de définition basées sur l'instruction spécifique ; ou
(ii) un message d'ordre comprenant une instruction spécifique qui est utilisée lorsque le support électronique portable (4) est émis et des données de programme basés sur l'instruction spécifique,
amener ledit appareil hôte (1) à enregistrer des données en mode point sur une mémoire interne (5a) selon un programme qui effectue une simulation selon le programme stocké sur la mémoire (6), les données en mode point enregistrées sur la mémoire interne (5a) étant incluses dans les messages émis générés, et étant utilisées en commun pour différents supports électroniques portables (4), et étant identiques aux données en mode point développées sur des mémoires de données (17) des supports électroniques portables (4) ;
amener ledit appareil hôte (1) à générer des messages de données émis communs pour différents supports électroniques portables (4), les messages des données émis communs comportant les données en mode point développées sur la mémoire interne (5a), et une instruction spécifique qui indique une opération d'écriture à effectuer pour la mémoire de données (17) du support électronique portable (4) ;
amener ledit appareil hôte (1) à transmettre les messages de données émis communs générés au support électronique portable (4) ;
amener ledit appareil hôte (1) à transmettre des messages de données émis individuels au support électronique portable (4), les messages de données émis individuels étant inclus dans les messages émis générés et étant différents pour les différents supports électroniques portables (4) ;
amener ledit support électronique portable (4) à écrire sur sa mémoire de données (17) des données émises développées en les données en mode point délivrées depuis l'appareil hôte (1) au moment d'une émission ;
amener ledit support électronique portable (4) à développer des données émises individuelles en d'autres données en mode point sur la mémoire de données (17) sur la base de messages de données émis individuels, les messages de données émis individuels comportant des données délivrées depuis l'appareil hôte (1) au moment d'une émission et étant différents pour les différents supports électroniques portables (4) ;
amener ledit support électronique portable (4) à écrire les autres données en mode point des données émises individuelles développées sur la mémoire de données (17) ;
amener ledit support électronique portable (4) à lire depuis la mémoire de données (17) les informations de définition sur la base d'une instruction spécifique que fournit un appareil externe lorsque la carte électronique portable est utilisée après l'émission ; et
amener ledit support électronique portable à exécuter un processus destiné à permettre l'utilisation du support (4) de mémoire portable en écrivant et en lisant des données sur et depuis sa mémoire de données (17), en utilisant les informations de définition.

2. Procédé selon la revendication 1, dans lequel le message de données émis commun comporte des informations de commande de protocole et un ordre indiquant l'opération d'écriture à effectuer pour la mémoire de données (17) dudit support électronique portable (4), et les informations de protocole et les informations d'ordre sont attachées aux données en mode point.

3. Procédé selon la revendication 1, dans lequel un processus d'identification est effectué en tant qu'un processus d'identification avant que le message de données émis commun soit transmis.
